# EUROPÄISCHE PATENTANMELDUNG

(11) **EP 1 726 352 A1**
(43) Veröffentlichungstag der Anmeldung: **29.11.2006**
(21) Anmeldenummer: 06010452.8
(22) Anmeldetag: 20.05.2006
(51) Int. Cl.: B01D 53/85

(54) **Verfahren und Vorrichtung zur Aufbereitung von Biogas oder Faulgas**

(30) Priorität: 27.05.2005 DE 102005024804; 08.06.2005 DE 102005026587
(71) Anmelder: Kaufmann, Jürgen, 92444 Rötz (DE)
(72) Erfinder: Kaufmann, Jürgen, 92444 Rötz (DE)
(74) Vertreter: Glück, Martin

(57) **Zusammenfassung**

Die Erfindung betrifft ein Verfahren sowie eine Vorrichtung zur Aufbereitung von Biogas oder Faulgas, bei dem das Biogas oder Faulgas einem Trocknungsprozess und einem Entschwefelungsprozess unterzogen wird. Hierbei wird das Biogas oder Faulgas (8) während des Entschwefelungsprozesses entlang eines Führungskanals (9.3) geführt wird.

## Beschreibung

Die Erfindung betrifft ein Verfahren sowie eine Vorrichtung zur Aufbereitung von Biogas und/oder Faulgas, bei dem das Biogas und/oder Faulgas einem Trocknungsprozess und einem Entschwefelungsprozess unterzogen wird.

Beim anaeroben Abbauprozess von organischen Substanzen entsteht Biogas, das im Wesentlichen aus Methan und Kohlendioxid besteht. Dieses Biogas wird energetisch in einem Dampfkessel oder in motorisch betriebenem Blockheizkraftwerken (BHKW) zur Erzeugung von Strom genutzt.

Besonders bei der Vergärung eiweißreicher Substanzen im Fermenter einer Biogasanlage entsteht ein erheblicher Anteil an Schwefelwasserstoff (H₂S), der bei der Verbrennung zu Schwefeldioxid (SO₂) oxidiert. Hohe Schwefelstoffkonzentrationen im Biogas führen insbesondere zu Problemen bei der Verwertung des Biogases beispielsweise in einem Blockheizkraftwerk. Diese führen zur Korrosion von Armaturen und Motorbauteilen des Blockheizkraftwerkes (BHKW), wodurch die Lebensdauer eines Blockheizkraftwerkes deutlich verkürzt wird. Zusätzlich führen hohe Schwefelkonzentrationen zu einer schnelleren Versauerung des Motoröls, so dass häufig kostenintensive Motorölwechsel vorgenommen werden müssen.

Neben einer Entschwefelung des aus einer Fermentereinheit gewonnenen Biogases ist eine Trocknung des Biogases erforderlich. Hierzu wird das Biogas gekühlt, so dass aufgrund des Wärmeentzugs der im Biogas enthaltene Wasseranteil an den Oberflächen der Kühleinheit kondensiert und dadurch abgeleitet werden kann. Das getrocknete Biogas weist somit einen geringeren Wasseranteil auf.

Anstelle von Biogas können auch Faulgase zum Antrieb von Maschinen in einem Blockheizkraftwerk verwertet werden. Faulgase entstehen bei durch die bakterielle Umsetzung von organischen Substanzen wie Mist oder Faulschlamm bei der Abwasserbeseitigung. Das entstehende Faulgas besteht zu 2/3 aus Methan und 1/3 aus Kohlendioxid und weist ebenfalls hohe Schwefelkonzentrationen auf.

Aufgabe der vorliegenden Erfindung ist es, ein Verfahren und eine Vorrichtung zur Aufbereitung von Biogas oder Faulgas zur Verfügung zu stellen, dass energetische Vorteile gegenüber dem aus dem Stand der Technik bekannten Verfahren und Vorrichtungen bietet und somit die Wirtschaftlichkeit des gesamten Gasgewinnungs- und Verarbeitungsprozesses bzw. der zugehörigen Biogas- bzw. Faulgasanlage deutlich erhöht. Die Aufgabe wird durch die Merkmale des Patentanspruches 1 und 8 gelöst.

Vorteilhaft wird beim erfindungsgemäßen Verfahren beispielsweise das Biogas während des Entschwefelungsprozess entlang eines Führungskanals geführt, wodurch zusätzlich die Schwefelkonzentration im Biogas auf unter 200 ppm reduziert werden kann. In einer bevorzugten Ausführungsform ist der Führungskanal spiralartig bzw. spiralförmig ausgebildet.

In einer weiteren vorteilhaften Ausbildung des erfindungemäßen Verfahrens wird dem Biogas durch den Trocknungsprozess Wärmeenergie entzogen und die entzogene Wärmeenergie über ein Wärmetauschsystem zumindest teilweise dem Entschwefelungsprozess erneut zugeführt. Hierdurch wird eine Zuführung von Wärmeenergie an den Entschwefelungsprozess zusätzlich zum Trocknungsprozess eingespart, wodurch die Energiebilanz des Gasaufbereitungsprozesses erheblich verbessert wird.

Ferner wird über das Wärmetauschsystem unter Ausnutzung des physikalischen Effektes der Verdampfungswärme dem Trocknungsprozess Wärmeenergie über ein gasförmiges Kältemittel entzogen, die Wärmenergie des gasförmigen Kältemittel durch Kompression erhöht und das komprimierte gasförmige Kältemittel zur Abgabe der Wärmeenergie dem Entschwefelungsprozess zugeführt.

Weiterhin vorteilhaft wird das Kältemittel über eine Kompressionseinheit zur Aufnahme von Wärmeenergie komprimiert und über eine Düseneinheit zur Abgabe von Wärmeenergie entspannt und/oder während des Entschwefelungsprozesses der im Biogas oder Faulgas enthaltenen Schwefelwasserstoff mit Hilfe von Mikroorganismen unter Zuführung von Umgebungsluft zu elementaren Schwefel oxidiert.
Vorteilhaft wird während des Trocknungsprozesses dem entschwefelten Biogas oder Faulgas durch Kühlung über Trocknermodule Wasser entzogen und/oder das Biogas oder Faulgas vor dem Entschwefelungsprozess mit vorzugsweise 0,2 bis 5 % Umgebungsluft angereichert.

Ferner wird über das Wärmetauschsystem das Kältemittel für den Trocknungsprozess auf eine Temperatur von ca. -10 bis 0 °C gekühlt und für den Entschwefelungsprozess auf eine Temperatur von ca. 60 - 70 °C erwärmt.

Vorteilhaft wird die Zuführung von Umgebungsluft über eine Flowmetereinheit gesteuert bzw. geregelt.

Weitere vorteilhafte Ausbildung des erfindungsgemäßen Verfahrens, insbesondere eine Vorrichtung zur Aufbereitung von Biogas oder Faulgas sind den weiteren Patentansprüchen zu entnehmen.

Im Folgenden wird die Erfindung anhand von Zeichnungen in einem Ausführungsbeispiel näher erläutert. Hierbei zeigen:
- Fig. 1: in einem schematischen Blockschaltbild den Aufbau einer Biogas- oder Faulgasanlage,
- Fig. 2: in schematischer Darstellung beispielhaft eine Vorrichtung zur Aufbereitung von Biogas oder Faulgas;
- Fig. 3: in schematischer Darstellung eine alternative Ausführung der Vorrichtung zur Aufbereitung von Biogas oder Faulgas;

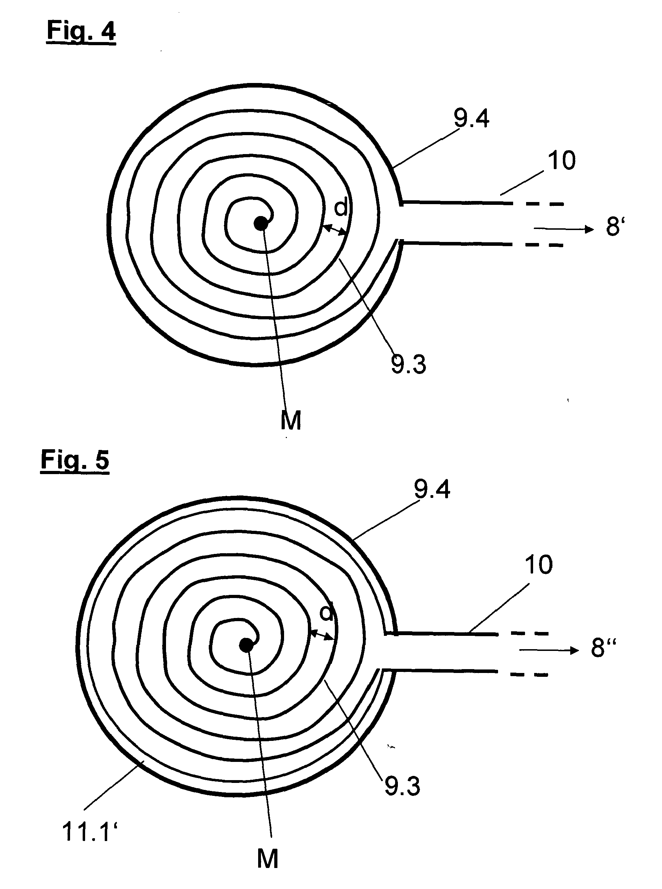

- Fig. 4: beispielhaft einen Schnitt entlang der Linie I-I durch das Entschwefelungsmodul gemäß Fig. 2 und
- Fig. 5: beispielhaft einen Schnitt entlang der Linie I-I durch das Entschwefelungsmodul gemäß Fig. 3.

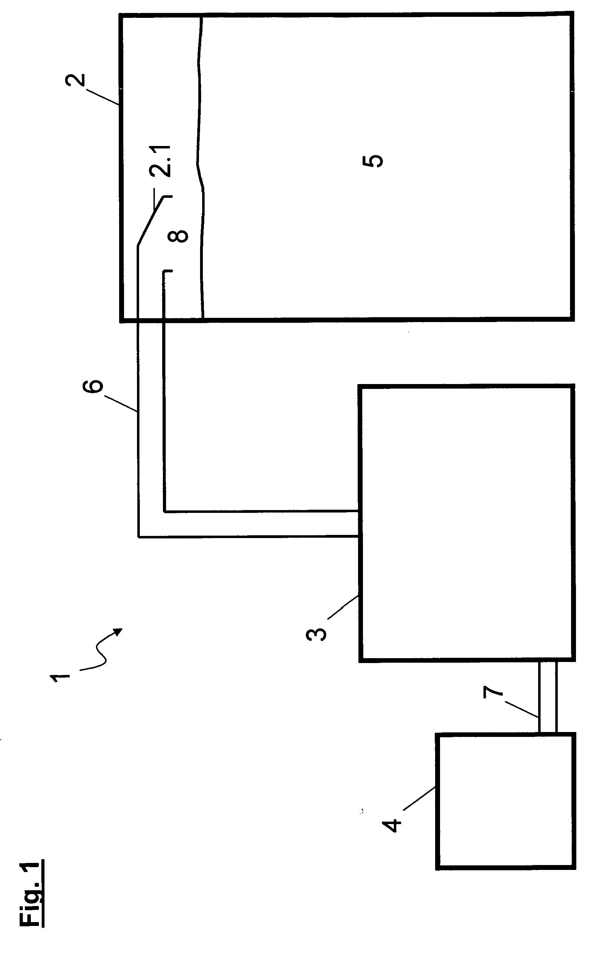

In Figur 1 ist in einem schematischen Blockschaltbild beispielhaft eine Biogasanlage 1 dargestellt, welche aus einer Fermentereinheit 2, einer Gasaufbereitungsvorrichtung 3 sowie einem Blockheizkraftwerk (BHKW) 4 besteht. Alternativ kann die dargestellte Anlage 1 auch zur Gewinnung und Aufbereitung von Faulgas 8 eingesetzt werden.

Die Fermentereinheit 2 ist mit Biomasse 5 befüllt, welche in der Fermentereinheit 2 zur Gewinnung von Biogas 8 vergoren wird. Das Biogas 8 besteht im Wesentlichen aus Methan, Kohlendioxid und einem erheblicher Anteil an Schwefelwasserstoff. Im oberen Bereich der Fermentereinheit bzw. des Fermentationsbehälters 2 wird das durch den Fermentationsprozess gewonnene Biogas 8 über eine Auffangvorrichtung 2.1 aufgefangen und über eine an diese angeschlossene erste Versorgungsleitung 6 an die Gasaufbereitungsvorrichtung 3 geführt.

In der Gasaufbereitungsvorrichtung 3 wird das Biogas 8 zunächst einem Entschwefelungsprozess und anschließend einem Trocknungsprozess unterzogen. Das Biogas 8 wird beispielsweise mit einer Temperatur von ca. 45 °C dem Entschwefelungsprozess zugeführt und weist nach Abschluss des Trocknungsprozesses eine Temperatur von ca. 4 - 10 °C auf.

Das derart aufbereitete, d.h. entschwefelte und getrocknete Biogas 8 wird von der Gasaufbereitungsvorrichtung 3 über eine zweite Versorgungsleitung 7 an das Blockheizkraftwerk (BHKW) 4 übertragen, indem es zur Energieerzeugung weiter verarbeitet wird. Beispielsweise wird das Biogas 8 über das Blockheizkraftwerk 4 in elektrische Energie umgesetzt, welche in ein daran angeschlossenes Stromnetz eingespeist werden kann.

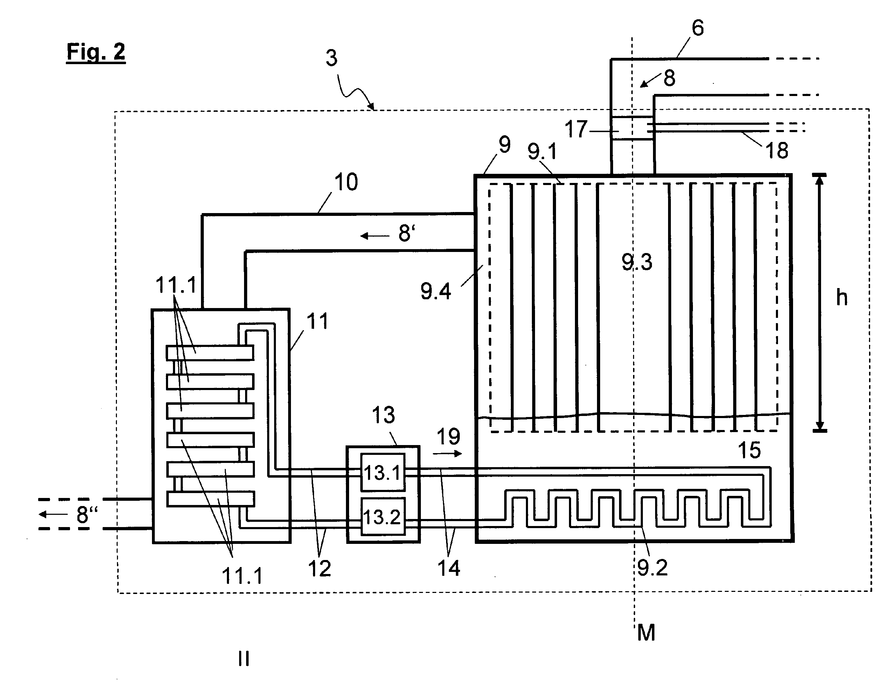

Zur Erläuterung der einzelnen Schritte des Aufbereitungsprozesses ist in Fig. 2 anhand eines schematischen Blockschaltbildes beispielhaft eine Ausführung einer Gasaufbereitungsvorrichtung 3 dargestellt.

Über die erste Versorgungsleitung 6 wird das über die Fermentereinheit 2 gewonnene Biogas 8 der Gasaufbereitungsvorrichtung 3 zugeführt. Hierzu ist die erste Versorgungsleitung 6 mit einer Entschwefelungseinheit 9 verbunden, welche ein Entschwefelungsmodul 9.1 sowie Heizmodul 9.2 aufweist.

Zumindest das Entschwefelungsmodul 9.1 ist in einer bevorzugten Ausführungsform zylinderförmig ausgebildet, d.h. weist einen kreisförmigen Querschnitt auf. Das Biogas 8 wird über die erste Versorgungsleitung 6 dem Entschwefelungsmodul 9.1 von oben zugeführt und zwar derart, dass das zu entschwefelnde Biogas 8 von der oberen Stirnseite des zylinderförmigen Entschwefelungsmodul 9.1 entlang der Mittelachse M des zylinderförmigen Entschwefelungsmodul 9.1 einströmt und sich im Entschwefelungsmodul 9.1 verteilt.

Der Entschwefelungsprozess wird gemäß einem bekannten Verfahren unter der Verwendung von Mikroorganismen, vorzugsweise "Tiobazilli"- Mikroorganismen realisiert. Über die im Entschwefelungsmodul 9.1 vorgesehenen Mikroorganismen wird der im Biogas 8 enthaltene Schwefelwasserstoff (H₂S) unter Zuführung von Umgebungsluft zu elementarem Schwefel (S) oxidiert. Der elementare Schwefel setzt sich im Entschwefelungsmodul 9.1 ab und das zumindest teilweise entschwefelte Biogas 8' wird anschließend dem Trocknungsprozess zugeführt.

Zur Anreicherung des Biogases 8 mit Umgebungsluft ist in der ersten Versorgungsleitung 6 vor Zuführung des Biogases 8 in die Entschwefelungseinheit 9 eine Flowmetereinheit 17 vorgesehen, welche beispielsweise über eine Rohrleitung 18 die Umgebungsluft ansaugt. Über die Flowmetereinheit 17 wird dem Biogas 8 Umgebungsluft zugeschnitten, um den Luftgehalt des Biogases 8 für den nachfolgenden Entschwefelungsprozess auf ca. 2% - 5 % zu erhöhen. Insbesondere kann über die Flowmetereinheit 17 auch die zugeschnittene Umgebungsluftmenge geregelt werden, so dass laufend die für eine optimale Entschwefelung erforderliche Umgebungsluftmenge zudosiert wird.

Im Entschwefelungsmodul 9.1 ist eine spiralförmige Führungskanaleinheit 9.3 vorgesehen, über welche das Biogas 8 im Entschwefelungsmodul 9.1 verwirbelt wird, wodurch eine gute Durchmischung des Biogases 8 mit der zugeführten Umgebungsluft erzielt wird. Die spiralförmige Führungskanaleinheit 9.3 ist konzentrisch um die Mittel- bzw. Längsachse M des Entschwefelungsmoduls 9.1 angeordnet bildet einen konzentrisch um die Mittelachse M verlaufenden Führungskanal beginnend von der Mittelachse M des im Querschnitt kreisförmigen Entschwefelungsmoduls 9.1 aus, der mit zunehmendem Abstand von der Mittelachse M nach außen hin das zu entschwefelnde Biogas 8 bis zum Ausgang der Entschwefelungseinheit 9 führt. Hierbei weist der spiralförmig ausgebildete Führungskanal eine Kanallänge I von beispielsweise ca. 40 - 50 m, vorzugsweise 42 m sowie eine Kanalbreite b von ca. 1 -3 cm, vorzugsweise 2 cm und eine Höhe h von ca. 80 - 120 cm, vorzugsweise 100 cm auf.

Durch die spiralartige bzw. spiralförmige Ausbildung der Führungskanaleinheit 9.3 wird die durch das Biogas 8 im Entschwefelungsmodul 9.1 zurückzulegende Weg- bzw. Kanallänge I deutlich erhöht, was eine Verbesserung der Entschwefelungsrate des Entschwefelungsprozesses bewirkt. In einer bevorzugten Ausführungsform ist die spiralförmige Führungskanaleinheit 9.3 aus Kunststoff hergestellt, welche vorzugsweise eine gewellte und/oder genoppte Oberflächenstruktur aufweist. Anhand der gewellten und/oder genoppten Oberflächenstruktur wird vorteilhaft eine zusätzliche Verwirbelungen des darüber geleiteten bzw. geführten Biogases 8 erzielt, wodurch die Vermischung des Biogases 8 mit der zugeführten Umgebungsluft weiter erhöht und eine Verbesserung der Ausbeute des Entschwefelungsprozesses bewirkt. Beispielsweise wird hierdurch eine Entschwefelung des Biogases 8 auf einen Wert unter 200 ppm mögl ich.

In den spiralförmigen Führungskanaleinheit 9.3 oxidiert der Schwefelwasserstoff zu elementarem Schwefel, der sich auf der Oberfläche der spiralförmigen Führungskanaleinheit 9.3 unter Freisetzung von Wasserstoff ablagert. Zur Erhöhung bzw. Verbesserung des Entschwefelungsprozesses wird vom Boden der Entschwefelungseinheit 9 über das Heizmodul 9.2 Wärme zugeführt. Hierzu weist die Entschwefelungseinheit 9 ein Wasserbad 15 auf, in dem sich das Heizmodul 9.2 befindet. Über das Heizmodul 9.2 wird zumindest die über die Außenwände der Entschwefelungseinheit 9 entweichende Wärmeenergie zugeführt bzw. die jahreszeitlich bedingten Außentemperaturschwankungen ausgeglichen.

Das Heizmodul 9.2 ist beispielsweise als schlangenartiges Rohrheizmodul 9.2 ausgebildet, in welchem ein Kältemittel 19 geführt ist und welches sich im Wasserbad 15 befindet. Die im Kältemittel 19 enthaltene Wärmeenergie wird über das schlangenartiges Rohrheizmodul 9.2 an das Wasser des Wasserbades 15 abgegeben.

Die spiralförmige Führungskanaleinheit 9.3 ist mit dem dem Heizmodul 9.2 zugewandten Stirnabschnitt zumindest teilweise in das Wasserbad 15 eingeführt, so dass ein Entweichen in Richtung Wasserbad 15 des innerhalb der spiralförmigen Führungskanaleinheit 9.3 geführten Biogases 8 nicht möglich ist. Zusätzlich wird über das warme Wasserbad 15 eine warmfeuchte Umgebung geschaffen, in der die für den Entschwefelungsprozess maßgeblichen Mikroorganismen optimalen Bedingungen ausgesetzt sind.

Das entschwefelte Biogas 8 wird somit ausgehend von einem Biogaseinlass über den durch die spiralförmige Führungskanaleinheit 9.3 ausgebildeten Führungskanal an den Biogasauslass der Entschwefelungseinheit 9 geleitet und von dort über eine dritte Versorgungsleitung 10 einer Gastrocknereinheit 11 zugeführt.

In der Gastrocknereinheit 11 sind zur Trocknung des entschwefelten Biogases 8' mehrere Trocknermodule 11.1 vorgesehen. Die Trocknermodule 11.1 sind beispielsweise als Platteneinheiten 11.1 ausgebildet, welche mit einem Kältemittel befüllt sind. Die einzelnen Platteneinheiten 11.1 sind über erste Kältemittelversorgungsleitungen 12 untereinander sowie mit einem Kälteaggregat 13 verbunden. Vorzugsweise sind die Platteneinheiten 11.1 zumindest teilweise aus Metall hergestellt und derart zueinander angeordnet, dass das diese umströmende, zu trocknende Biogas 8' mehrfach umgelenkt und hierdurch verwirbelt wird. Über das Kältemittel 19 werden die Außenseiten der Platteneinheiten 11.1 gekühlt, an denen das Biogas 8' entlang strömt. Das im Biogas 8' enthalte Wasser kondensiert dabei an der Oberfläche der Platteneinheiten 11.1 und das anfallende Kondensat wird an den ungekühlte Stirnseiten der Platteneinheiten 11.1 geleitet und aus der Gastrocknereinheit 11 abgeführt.

Ferner ist über zweite Kältemittelversorgungsleitungen 14 das Kälteaggregat 13 mit dem Heizmodul bzw. dem schlangenförmigen Rohrheizmodul 9.2 der Entschwefelungseinheit 9 verbunden. Das Kälteaggregat 13 weist beispielsweise eine Kompressoreinheit 13.1 und eine Düseneinheit 13.2 auf, welche über jeweils die erste und zweite Kältemittelversorgungsleitungen 12, 14 mit den Trocknermodulen 11.1 bzw. der schlangenförmigen Rohrheizmodul 9.2 verbunden sind. Diese bilden somit ein Wärmetauschsystem aus, in dem das Kältemittel 19 zirkuliert.

Durch das Kälteaggregat 13 wird die aufgrund der Trocknung des Biogases 8' in der Gastrocknereinheit 11 gewonnene Wärmeenergie zu Erwärmung des Entschwefelungsprozesses über das Heizmodul 9.2 ausgenutzt. Das Kälteaggregat 13 steht zur Verwirklichung des physikalischen Effektes der Verdampfungswärme mit dem Heizmodul 9.2 und dem Trocknermodulen 11.1 in einem Wirkzusammenhang, d.h. erfährt im Wärmetauschsystem eine Aggregatzustandsänderung. Das Kältemittel 19 wird zunächst unter Druck und Wärmeabgabe bei hoher Temperatur verflüssigt, anschließend wird das Kältemittel 19 an einer Düse entspannt und bei niedriger Temperatur unter Wärmeaufnahme wieder gasförmig. Dem Prozess wird hierbei von außen Energie in Form von mechanischer Arbeit über die Kompressoreinheit 13.1 zugeführt.

Im vorliegenden Anwendungsfall wird das von der Gastrocknereinheit 11 empfangene gasförmige Kältemittel 19 über die Kompressoreinheit 13.1 des Kälteaggregates 13 verdichtet und hierdurch erwärmt. Beispielsweise weist das Kältemittel 19 nach der Kompression durch die Kompressoreinheit 13.1 auf ca. 8 bis 10 bar eine Temperatur von ca. 60 - 70 °C auf. Das derart verdichtete Kältemittel 19 wird anschließend durch das schlangenförmige Rohrheizmodul 9.2 geführt und heizt unter Abgabe von Wärmeenergie das Wasser des Wasserbades 15 auf. Hierdurch wird das verdichte Kältemittel 19 - abhängig von der Umgebungstemperatur - auf ca. 50 - 60 °C abgekühlt.

Das abgekühlte Kältemittel wir nach Durchlaufen des schlangenförmigen Rohrheizmoduls 9.2 an die Düseneinheit 13.2 des Kälteaggregats 13 zurückgeführt. Alternativ kann das abgekühlte Kältemittel 19 über eine Luftkühlereinheit (nicht in den Figuren dargestellt) weiter abgekühlt werden und im Anschluss daran der Düseneinheit 13.2 zugeführt werden. Über die Düseneinheit 13.2 wird das Kältemittel expandiert, d.h. der Druck des Kältemittels von ca. 8 - 10 bar auf ca. 2 - 3 bar reduziert und kühlt expansionsbedingt auf bis zu - 10 °C ab. Das abgekühlte gasförmige Kühlmittel 19 wird anschließend in die Trocknermodule 11.1 der Gastrocknereinheit 11 geleitet. In den Trocknermodulen 11.1 nimmt das Kältemittel unter Abkühlung des entschwefelten Biogases 8' wieder Wärme auf und wird mit einer Temperatur von ca. 8 - 12 °C an die Kompressoreinheit 13.1 des Kälteaggregats 13 zurückgeführt.

Durch die geschickte Ausnutzung der Abgabe von Wärmeenergie im Trocknungsprozess und der Wärmezufuhr im Entschwefelungsprozess verbessert sich die Energiebilanz des gesamten Gasaufbereitungsprozesses erheblich. Eine gemäß dem Stand der Technik zusätzlich erforderliche unabhängige Heizvorrichtung kann somit eingespart werden.

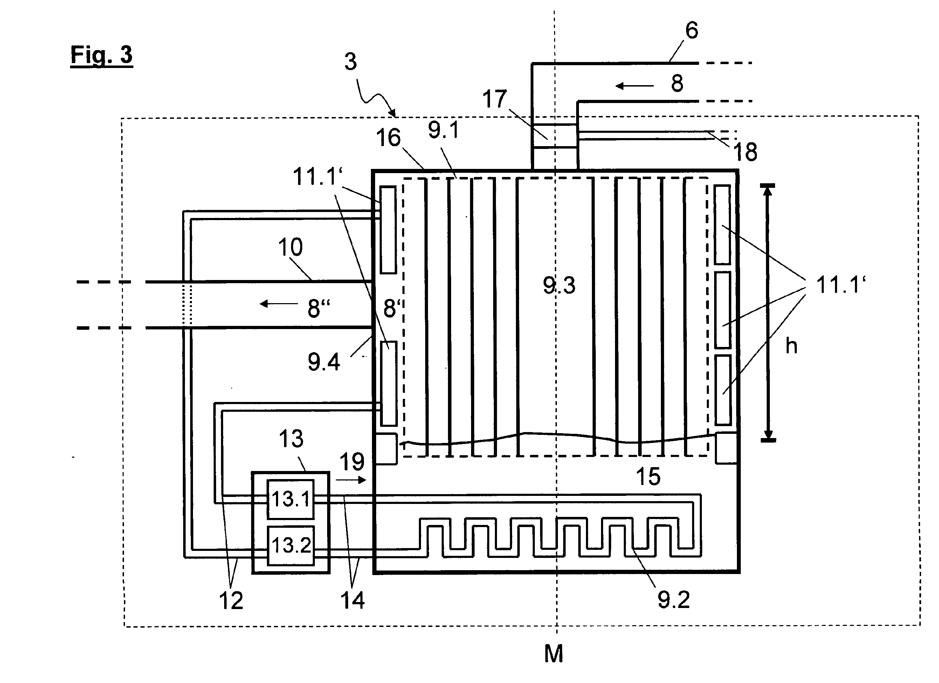

In einer alternativen Ausführungsform gemäß Figur 3 sind die Gastrocknereinheit 11 und die Entschwefelungseinheit 9 in einer einzigen Einheit, nämlich einer Entschwefelungs- und Trocknereinheit 16 realisiert. Hierzu sind zwischen der Außenwand 9.4 der Entschwefelungseinheit 9 und dem als spiralförmige Führungskanaleinheit 9.3 ausgebildeten Entschwefelungsmodul 9.1 Trocknermodule 11.1' vorgesehen, welche beispielsweise konzentrisch um die Mittelachse M der Entschwefelungs- und Trocknereinheit 16 angeordnet sind. Hierbei können die Trocknermodule 11.1' beispielsweise als zumindest halbkreisringförmige Platteneinheiten 11.1' ausgebildet sein, über welche das entschwefelte Biogas 8' nach dem Austreten aus der spiralförmige Führungskanaleinheit 9.3 einer Trocknung unterzogen wird.

Die in Figur 3 dargestellte Ausführungsform ist insbesondere vorteilhaft für die Aufbereitung von Faulgas 8 einsetzbar. Hierbei ist die Gastrocknereinheit 11 weniger zur Trocknung des Faulgases 8 an sich vorgesehen, sondern vielmehr zum Entzug von Wärmeenergie des im Bereich der Außenwand 9.4 befindlichen Faulgases 8 nach Durchlaufen des Entschwefelungsprozesses. Durch Kühlung des Faulgases 8 im genannten äußeren Bereich der Entschwefelungs- und Trocknereinheit 16 wird somit dem Faulgas 8 Wärmeenergie entzogen, welche über das Wärmetauschsystem 11.1, 12, 13, 14, 9.2 dem im inneren Bereich der Entschwefelungs- und Trocknereinheit 16 ablaufenden Entschwefelungsprozess wieder zugeführt wird.

Beispielsweise weist ein in einer Kläranlage erzeugtes Faulgas 8 eine durchschnittliche Temperatur von ca. 35 C° auf, welche allerdings für die Durchführung eines effektiven Entschwefelungsprozesses zu gering ist. Durch den Entzug der Wärmeenergie im äußeren Randbereich der Entschwefelungs- und Trocknereinheit 16 und dessen Zuführung in den inneren Bereich der Entschwefelungs- und Trocknereinheit 16 wird die Temperatur des zu entschwefelnden Faulgases 8 erhöht, wodurch die Ausbeute des Entschwefelprozesses unter Reduzierung der Verarbeitungsdauer deutlich erhöht wird.

Die Erfindung wurde voranstehend anhand von mehreren Ausführungsbeispielen beschrieben. Es versteht sich, dass zahlreiche Modifikationen sowie Abwandlungen möglich sind, ohne dass dadurch der der Erfindung zugrundeliegende Erfindungsgedanke verlassen wird.

### Bezugszeichenliste

- 1: Biogas- oder Faulgasanlage
- 2: Fermentereinheit
- 2.1: Auffangvorrichtung
- 3: Gasaufbereitungsvorrichtung
- 4: Blockheizkraftwerk (BHKW)
- 5: Biomasse
- 6: erste Versorgungsleitung
- 7: zweite Versorgungsleitung
- 8: Biogas oder Faulgas
- 8': entschwefeltes Biogas
- 8": entschwefeltes und getrocknetes Biogas
- 9: Entschwefelungseinheit
- 9.1: Entschwefelungsmodul
- 9.2: Heizmodul
- 9.3: spiralförmige Führungskanaleinheit
- 9.4: Außenwand
- 10: dritte Versorgungsleitung
- 11: Gastrocknereinheit
- 11.1,11.1': Gastrocknermodul bzw. Platteneinheiten
- 12: erste Kältemittelversorgungsleitungen
- 13: Kälteaggregat
- 13.1: Kompressoreinheit
- 13.2: Düseneinheit
- **14**: zweite Kältemittelversorgungsleitungen
- 15: Wasserbad
- 16: Entschwefelungs- und Trocknereinheit
- 17: Flowmetereinheit
- 18: Rohrleitung
- 19: Kältemittel
- M: Mittelachse
- I: Kanallänge
- b: Kanalbreite
- h: Kanalhöhe

## Patentansprüche

1. Verfahren zur Aufbereitung von Biogas oder Faulgas, bei dem das Biogas oder Faulgas (8) einem Trocknungsprozess und einem Entschwefelungsprozess unterzogen wird, **dadurch gekennzeichnet, dass** das Biogas oder Faulgas (8) während des Entschwefelungsprozesses entlang eines Führungskanals (9.3) geführt wird.

2. Verfahren nach Anspruch 1, **dadurch gekennzeichnet, dass** dem Biogas oder Faulgas (8) durch den Trocknungsprozess Wärmeenergie entzogen wird und die entzogene Wärmeenergie über ein Wärmetauschsystem (11.1, 12, 13, 14, 9.2) zumindest teilweise dem Entschwefelungsprozess zugeführt wird.

3. Verfahren nach Anspruch 2, **dadurch gekennzeichnet, dass** über das Wärmetauschsystem (11.1, 12, 13, 14, 9.2) unter Ausnutzung des physikalischen Effektes der Verdampfungswärme dem Trocknungsprozess Wärmeenergie über ein gasförmiges Kältemittel (19) entzogen wird, die Wärmenergie des gasförmigen Kältemittel (19) durch Kompression erhöht wird und das komprimierte gasförmige Kältemittel (19) zur Abgabe der Wärmeenergie dem Entschwefelungsprozess zugeführt wird.

4. Verfahren nach Anspruch 3, **dadurch gekennzeichnet, dass** das Kältemittel (19) über eine Kompressionseinheit (13.1) zur Aufnahme von Wärmeenergie komprimiert und über eine Düseneinheit (13.2) zur Abgabe von Wärmeenergie entspannt wird und/oder dass während des Entschwefelungsprozesses der im Biogas oder Faulgas (8) enthaltenen Schwefelwasserstoff mit Hilfe von Mikroorganismen unter Zuführung von Umgebungsluft zu elementaren Schwefel oxidiert wird.

5. Verfahren nach einem der vorhergehenden Ansprüche, **dadurch gekennzeichnet, dass** während des Trocknungsprozesses dem entschwefelten Biogas oder Faulgas (8) durch Kühlung über Trocknermodule (11.1) Wasser entzogen wird und/oder dass das Biogas oder Faulgas (8) vor dem Entschwefelungsprozess mit vorzugsweise 0,2 bis 5 % Umgebungsluft angereichert wird.

6. Verfahren nach einem der vorhergehenden Ansprüche, **dadurch gekennzeichnet, dass** über das Wärmetauschsystem (11.1, 12, 13, 14, 9.2) das Kältemittel (19) für den Trocknungsprozess auf eine Temperatur von ca. -10 bis 0 °C gekühlt und für den Entschwefelungsprozess auf eine Temperatur von ca. 60 - 70 °C erwärmt wird und/oder dass die Zuführung von Umgebungsluft über eine Flowmetereinheit gesteuert bzw. geregelt wird.

7. Verfahren nach einem der vorhergehenden Ansprüche, **dadurch gekennzeichnet, dass** das Biogas oder Faulgas (8) durch den Führungskanal (9.3) spiralförmig geführt wird.

8. Vorrichtung zur Aufbereitung von Biogas oder Faulgas (8) mit zumindest einer Entschwefelungseinheit (9) und zumindest einer Gastrocknereinheit (11), **dadurch gekennzeichnet, dass** die Entschwefelungseinheit (9) ein Entschwefelungsmodul (9.1) mit einer Führungskanaleinheit (9.3) aufweist.

9. Vorrichtung nach Anspruch 8, **dadurch gekennzeichnet, dass** die Entschwefelungseinheit (9) und die Gastrocknereinheit (11) über ein Wärmetauschsystem (11.1, 12; 13, 14, 9.2) verbunden sind, welches zum Entzug von Wärmeenergie aus dem in der Gastrocknereinheit (11) befindlichen Biogases oder Faulgases (8) und zur zumindest teilweisen Zuführung der entzogenen Wärmeenergie an das in der Entschwefelungseinheit (9) befindlichen Biogas oder Faulgas (8) ausgebildet ist.

10. Vorrichtung nach Anspruch 9, **dadurch gekennzeichnet, dass** das Wärmetauschsystem zumindest ein Gastrocknermodul (11.1), ein Kälteaggregat (13) und ein Heizmodul (9.2) aufweist und/oder dass das Kälteaggregat (13) über erste Kältemittelversorgungsleitungen (12) mit dem zumindest einen Gastrocknermodul (11.1) und über zweite Kältemittelversorgungsleitungen (14) mit dem Heizmodul (9.2) verbunden ist und/oder dass zum Transport der Wärmeenergie im Wärmetauschsystem (11.1, 12, 13, 14, 9.2) ein in einem Kreislauf geführtes Kältemittel (19) vorgesehen ist.

11. Vorrichtung nach einem der Ansprüche 8 bis 10, **dadurch gekennzeichnet, dass** die Führungskanaleinheit (9.3) spiralartig bzw. spiralförmig ausgebildet ist.

12. Vorrichtung nach einem der Ansprüche 8 bis 11, **dadurch gekennzeichnet, dass** die Führungskanaleinheit (9.3) aus Kunststoff oder Edelstahl hergestellt ist.

13. Vorrichtung nach einem der Ansprüche 8 bis 12, **dadurch gekennzeichnet, dass** die Führungskanaleinheit (9.3) eine gewellte und/oder genoppte Oberflächenstruktur aufweist.

14. Vorrichtung nach einem der Ansprüche 8 bis 13, **dadurch gekennzeichnet, dass** das Heizmodul als schlangenartiges Rohrheizmodul (9.2) ausgebildet ist, welches vorzugsweise in einem Wasserbad (15) vorgesehen ist und/oder dass das Kälteaggregat (13) zumindest eine Kompressoreinheit (13:1) und zumindest eine Düseneinheit (13.2) aufweist, an die jeweils die ersten und zweiten Kältemittelversorgungsleitungen (12, 14) angeschossen sind.

15. Vorrichtung nach einem der Ansprüche 8 bis 14, **dadurch gekennzeichnet, dass** zur Zuführung von Umgebungsluft an das Biogas oder Faulgas (8) eine Flowmetereinheit (17) vorgesehen ist und/oder dass als Kälteaggregat (13) ein druckgeregeltes Kälteaggregat (13) vorgesehen ist.

16. Vorrichtung nach einem der Ansprüche 8 bis 15, **dadurch gekennzeichnet, dass** die spiralartige bzw. spiralförmige Führungskanaleinheit (9.3) zylinderförmig ausgebildet ist und an zumindest einer Stirnseite im Bereich der Mittelachse (M) einen Gaseinlaß und im Bereich der Außenwand (9.4) einen Gasauslaß aufweist.

17. Vorrichtung nach Anspruch 16, **dadurch gekennzeichnet, dass** spiralartige bzw. spiralförmige Führungskanaleinheit (9.3) mit Ihrer dem Gaseinlaß gegenüberliegenden Stirnseite zumindest teilweise in das Wasserbad (15) hineinragt.

18. Vorrichtung einem der Ansprüche 8 bis 17, **dadurch gekennzeichnet, dass** die zumindest eine Entschwefelungseinheit (9) und zumindest eine Gastrocknereinheit (11) eine Baueinheit (16) ausbilden, und zwar eine Entschwefelungs- und Trocknereinheit (16).
